# EUROPÄISCHE PATENTSCHRIFT

(11) **EP 2 613 648 B1**
(45) Veröffentlichungstag und Bekanntmachung des Hinweises auf die Patenterteilung: **20.09.2017**
(21) Anmeldenummer: 11757769.2
(22) Anmeldetag: 31.08.2011
(51) Int. Cl.: C13B 50/00, A23L 29/00, A23L 21/25, A23L 27/10

(54) **VERFAHREN FÜR DIE AROMATISIERUNG VON SIRUP UND HONIG**
METHOD FOR FLAVOURING SYRUP AND HONEY
PROCÉDÉ D'AROMATISATION DE SIROP Et DE MIEL

(30) Priorität: 06.09.2010 DE 102010044490
(43) Veröffentlichungstag der Anmeldung: 17.07.2013
(73) Patentinhaber: Thoma, Siegfried, 67063 Ludwigshafen (DE)
(72) Erfinder: Thoma, Siegfried, 67063 Ludwigshafen (DE)
(74) Vertreter: Thews, Gustav
(86) Internationale Anmeldenummer: PCT/EP2011/004401
(87) Internationale Veröffentlichungsnummer: WO 2012/031715

(56) Entgegenhaltungen:
- DE-U1-202007 012 297
- DE-U1-202008 014 144
- JP-A- 56 023 855
- US-A- 2 765 922
- Anonymous: "Make your own Infused Honey with household herbs & spices", , 26. März 2010 (2010-03-26), Seiten 1-4, XP002664863, Gefunden im Internet: URL:http://handmadephilly.wordpress.com/20 10/03/26/make-your-own-infused-honey-with- household-herbs-spices/ [gefunden am 2011-11-30]
- Anonymous: "Herbal Honey", , 15. Februar 2009 (2009-02-15), Seiten 1-2, XP002664864, Gefunden im Internet: URL:http://blacktoadherbals.com/blog/?p=38 [gefunden am 2011-11-30]
- Geli: "Lavendel-Honig", , 5. Juli 2007 (2007-07-05), Seiten 1-4, XP002664865, Gefunden im Internet: URL:http://www.krautundrueben.de/Forum/boa rd_entry.php?id=43061&page=0&order=time&ca tegory=all [gefunden am 2011-11-30]
- Nelly K: "Rosenblütenhonig", , 10. Mai 2009 (2009-05-10), Seiten 1-3, XP002664866, Gefunden im Internet: URL:http://www.symptome.ch/vbboard/grossmu tters-hausmittel/49763-rosenhonig.html [gefunden am 2011-11-30]
- Mamje: "Löwenzahnhonig", , 11. August 2001 (2001-08-11), Seiten 1-2, XP002664867, Gefunden im Internet: URL:http://www.natur-forum.de/forum/viewto pic.php?f=3&t=14770&p=347&hilit=kr%C3%A4ut erhonig#p347 [gefunden am 2011-12-01] in der Anmeldung erwähnt
- Anonymous: "ZGK", , 22. Januar 2010 (2010-01-22), Seiten 1-1, XP002664868, Gefunden im Internet: URL:http://hb.ikma.de/index.php?title=ZKG& redirect=no [gefunden am 2011-12-01]
- L F Echeverri: "NUMERICAL STUDY OF THE FLOW IN AIR FLOTATION SYRUP CLARIFIERS", Proc S Afr. Sug. Technol. Ass, 1 January 2006 (2006-01-01), pages 378-390, XP055139605, Retrieved from the Internet: URL:http://www.sasta.co.za/wp-content/uplo ads/Proceedings/2000s/2006_Echeverri_numer ical study of the flow.pdf [retrieved on 2014-09-11]
- Rekru.De - Rekru Gmbh Kressbronn: "Getränkefass rund Speidel 12 l bis 120 l, :: REKRU Brennereibedarf Mostereibedarf Braureibedarf Kellereibedarf", , 30 September 2009 (2009-09-30), pages 1-2, XP055139604, Retrieved from the Internet: URL:http://web.archive.org/web/20090930083 834/http://www.rekru.de/product_info.php?p roducts_id=Getraenkefass-rund-Speidel-12-l -bis-120-l-323 [retrieved on 2014-09-11]

## Beschreibung

Die Erfindung betrifft ein Verfahren zum Aromatisieren von Sirup und Honig. Hierbei sei vorausgesetzt, dass das spezifische Gewicht des Sirups oder Honigs höher ist, als das spezifische Gewicht des für die Anreicherung verwendeten Extraktionsguts (z.B. pflanzliche Feststoffe).

### STAND DER TECHNIK

Möglichkeiten zum Anreichern oder Aromatisieren Honig sind bereits aus dem Stand der Technik bekannt. So beschreibt die DE 199 039 69 A1 von Kaiser, Kristian. ein Verfahren zur Herstellung eines naturbelassenen Nahrungsmittels mit Honig, wobei pflanzliche Feststoffe den typischen, sehr süßen Honiggeschmack überlagern sollen. Das beschriebene Nahrungsmittel ist kein reines Honigprodukt, sondern eine Honig enthaltende Masse, die pflanzliche Feststoffe enthält, die nicht aus Honig gewonnen werden. Es werden dehydrierte pflanzliche Feststoffe pulverisiert, verbrauchsfertiger und verzehrgerechter Honig wird auf Filtrierfähigkeit erwärmt und mit dem Pulver versetzt. Es wird ein Pflanzenhonigbrei von pastöser Konsistenz erhalten. Insbesondere sollen die pflanzlichen Feststoffe und der Honig zu einem homogenen, sich nicht mehr entmischenden Produkt verarbeitet werden. Hierbei wird der Honig erwärmt, die warme Masse wird filtriert und abgekühlt.

Ein angereicherter Sirup ist auch aus der DE 10 2006 022 301 A1 bekannt; der beschriebene Sirup, der mit Früchten oder Saft von Prunus laurocerasus ("Kirschlorbeer") vermischt ist, soll Heilwirkung haben.

Bekannte pharmazeutische Verfahren wie die Mazeration oder Perkolation verwenden einen reinen Fließprozess bei dem das spezifische Gewicht der beteiligten Substanzen keine Rolle spielt.

Insbesondere bei der Perkolation wird die Verwendung von nicht zu fein gemahlenem Extraktionsgut beschrieben, d. h. die Korngröße sollte zwischen 0,8 und 2 mm liegen. Darüber hinaus wird durch die beschriebenen röhren- oder trichterförmigen Perkulatoren (beschrieben im Verhältnis von Höhe zu mittlerem Durchmesser von 5:1) die Menge der in einer Anordnung und einem Arbeitsschritt verarbeitetem Extraktionsgut und Lösungsmittel insofern eingeschränkt, als dass ein rechteckiger Querschnitt eines Gefäßes in einer Prozessanordnung immer dann den größten Inhalt aufweist, wenn der Querschnitt quadratisch ist, d. h. bei einem Seitenverhältnis 1:1. Entsprechend hat bei identischer Grundfläche ein Gefäß mit einem quadratischen Querschnitt (Seitenverhältnis 1:1) immer ein größeres Volumen als ein Gefäß mit einem Seitenverhältnis von 5:1.

Die Form der Perkulatoren birgt weiterhin die Gefahr, dass bei Verdichtung des Extraktionsguts im Laufe des Verfahrens (z. B. aufgrund von Nachquellen des Extraktionsguts) der Durchfluss durch den Perkulator, d. h. der gesamte Prozess zum Erliegen kommt. Außerdem werden bei der Perkulation häufig sogenannte Fritten (Filter aus gepresstem Glas oder Keramik) oder ein Wattebausch für die Filterung finsterer Partikel eingesetzt. Aufgrund der Feinheit einer Fritte und der hohen Viskosität von Honig kann Honig nicht praktikabel mit einer Fritte gefiltert werden. Auch ein Wattebausch verklebt, falls man versucht, Honig damit zu filtern.

Verfahren für die Anreicherung von Ölen mit pflanzlichen Feststoffen (z. B. Offenlegungsschrift DE 1 929 059 A, vom 18. Dezember 1969) können durchgängig nicht als Vergleich verwendet werden, weil das spezifische Gewicht von Ölen im Allgemeinen kleiner ist als das spezifische Gewicht der häufig als Extraktionsgut verwendeten pflanzlichen Feststoffe.

Weiterhin sind in den japanischen Veröffentlichungen JP 59 187 769 A, JP 01 202 264 A sowie JP 02 312 565 A Gemische von Honig mit weiteren pflanzlichen Feststoffen beschrieben, deren Herstellung durchgängig keine Trennung (aufgrund des spezifischen Gewichts) des Honigs von den pflanzlichen Feststoffen darstellt. Darüber hinaus wird in JP 01 202264 A eine Erhitzung auf 50 °C dargestellt und in JP 02 312 565 A ist eine finale Mischung mit einem Pflaumenbrei (UME / plum cream) vorgesehen.

Weiterhin ist in Reichspatentschrift DE 604 498 ein Extraktionsverfahren für die Herstellung von Frucht- und Pflanzenessenzen beschrieben. Hierbei wird jedoch Glycerinacetat als Extraktionsmittel verwendet.

Im Internet-Naturforum (natur-forum.de) wird ein Verfahren zur Herstellung eines Spitzwegerich-Hustenhonigs beschrieben. Hierbei werden verschlossene Gläser verwendet, deren Handhabung (Öffnen, Schließen sowie regelmäßiges Drehen) deutlich aufwendiger als das im Folgenden beschriebene Verfahren ist.

In der WO 02/05663 A1 ist ein Verfahren beschrieben, bei welchem im ersten Schritt Zitronenscheiben für 12 - 16 Tage in einem verschlossenen Gerät stehen gelassen werden müssen. Entsprechende Voraussetzung verlangt das nachfolgend beschriebene Verfahren nicht.

Die nach dem Anmeldetag durch die ISA im Internet recherchierten Dokumente XP002664863 "Make your own Infused Honey with household herbs & spices", XP002664864 "Herbal Honey", XP002664865 "Lavendel-Honig", XP002664866 "Rosenblütenhonig" und XP002664867 "Löwenzahnhonig" zeigen alle Verfahren zur Aromatisierung von hochviskosen Zuckerlösungen auf. Hierbei wird Honig mit einem Extraktionsgut wie Zimt, Kräuter, Lavendel, Rosenblüten oder Spitzwegerich versetzt und reifen gelassen. Das zugegebene Extraktionsgut wird dann im Honig belassen oder gefiltert, beispielsweise über einen Trichter, ein Tuch oder ein Sieb.

### OFFENBARUNG

Ausgehend von diesem Stand der Technik liegt der vorliegenden Erfindung die Aufgabe zugrunde, ein verbessertes Verfahren zum Aromatisieren von Honig oder Sirup, im Folgenden auch zusammenfassend als "hochviskose Zuckerlösung" bezeichnet, bereitzustellen. Diese Aufgabe wird durch ein Verfahren mit den Merkmalen des unabhängigen Anspruchs 1 gelöst. Bevorzugte Ausführungsformen werden durch die Unteransprüche beschrieben.

Gemäß dem Verfahren werden die als Extraktionsgut verwendeten pflanzlichen Feststoffe fein zerkleinert (auch bis hin zu einer Korngröße von deutlich weniger als 0,8 mm, z. B. fein gemahlener Kaffee oder Zimtpulver) und mit der hochviskosen Zuckerlösung vermischt.

Mit der Mischung wird ein Reaktionsgefäß gefüllt, welches eine Einfüllöffnung und stromabwärts eine Auslassöffnung aufweist. Die Proportionen des Reaktionsgefäßes können im Gegensatz zur Perkolation so gewählt werden, dass man niedrige aber hinsichtlich des Umfangs bzw. der Standfläche große Gefäße verwendet. Ein Verhältnis von mittlerem Durchmesser zu Höhe von 1:1 ist durchaus praktikabel. Dies steigert die Stabilität der verwendeten Produktionsanordnung.

Die Auslassöffnung wird verschlossen und die Mischung lässt man reifen, so dass vorteilhaft die im Extraktionsgut enthaltenen löslichen Inhaltsstoffe (z. B. ätherische Öle, Flavonoide) in die hochviskose Zuckerlösung übergehen.

Aufgrund des unterschiedlichen spezifischen Gewichts der hochviskosen Zuckerlösung und des Extraktionsguts findet eine Trennung statt. Die Trennung nimmt jedoch aufgrund der hohen Viskosität der Zuckerlösung eine gewisse Zeit in Anspruch. Dieser Zeitraum ist der schon beschriebenen Reifephase zuzuordnen.

Während dieser Reifephase findet zum Teil ein Nachquellen des Extraktionsguts statt. Aufgrund der Form des verwendeten Reaktionsgefäßes (d. h. eher flache Reaktionsgefäße, z. B. im Verhältnis von Höhe zu mittlerem Durchmesser im Verhältnis von 1:1) wird verhindert, dass die Anordnung verstopft bzw. das Verfahren zum Erliegen kommt.

Aufgrund des als Pulver verwendeten Extraktionsguts wird verhindert, dass sich in der Reifezeit die hochviskose Zuckerlösung vollständig von den pflanzlichen Feststoffen trennt. Aufgrund des unterschiedlichen spezifischen Gewichts der hochviskosen Zuckerlösung und dem Extraktionsgut sammelt sich das Extraktionsgut aber in einer Schicht im oberen Bereich des Reaktionsgefäßes, im unteren Teil setzt sich die hochviskose Zuckerlösung ab. Eine vollständige Trennung tritt aufgrund der Viskosität und der Feinheit des verwendeten Pulvers nicht auf.

Optional kann durch regelmäßiges Mischen eine bessere Verteilung des Extraktionsguts in der hochviskosen Zuckerlösung erreicht werden. Das Vermischen kann maschinell wie auch manuell erfolgen. Aufgrund der unterschiedlichen Dichte der hochviskosen Zuckerlösung und des Extraktionsguts trennt sich das Extraktionsgut wieder vom Honig.

Nach Abschluss der Reifezeit wird die Auslassöffnung geöffnet und der sich abgesetzte und angereicherte Teil der hochviskosen Zuckerlösung wird abgelassen. Gleichzeitig dazu kann bzw. wird oben weitere unvermischte hochviskose Zuckerlösung nachgefüllt.

Das Verfahren wird bei der Nutzung von Honig bei Raumtemperatur durchgeführt. Eine Erhitzung ist nicht erforderlich. Somit ist gewährleistet, dass die Inhaltsstoffe des Honigs möglichst vollständig erhalten bleiben. Bei der Verwendung von Sirupen, deren Inhaltsstoffe hinsichtlich Erhitzung stabil sind (z. B. Zuckerrübensirup) kann durch Erhitzung während der Reifezeit eine beschleunigte und intensivere Aromatisierung erfolgen. Dies soll jedoch nur insofern Teil dieses Verfahrens sein, als dass das Extraktionsgut durch die Erhitzung nicht beeinträchtigt wird.

Eine schmackhafte hochviskose Zuckerlösung wird geschaffen, die auch Heilwirkung aufweisen kann, wenn die ätherischen Öle etwa aus Kräutern wie Thymian oder Pfefferminze stammen, so dass beispielsweise schleimlösende oder Husten lindernde Wirkstoffe in die hochviskose Zuckerlösung übertreten.

Weitere Ausführungsbeispiele sowie einige der Vorteile, die mit diesem und weiteren Ausführungsbeispielen verbunden sind, werden durch die nachfolgende ausführliche Beschreibung deutlich und besser verständlich, wobei die begleitende Figur die Beschreibung unterstützt.

### KURZBESCHREIBUNG DER FIGUREN

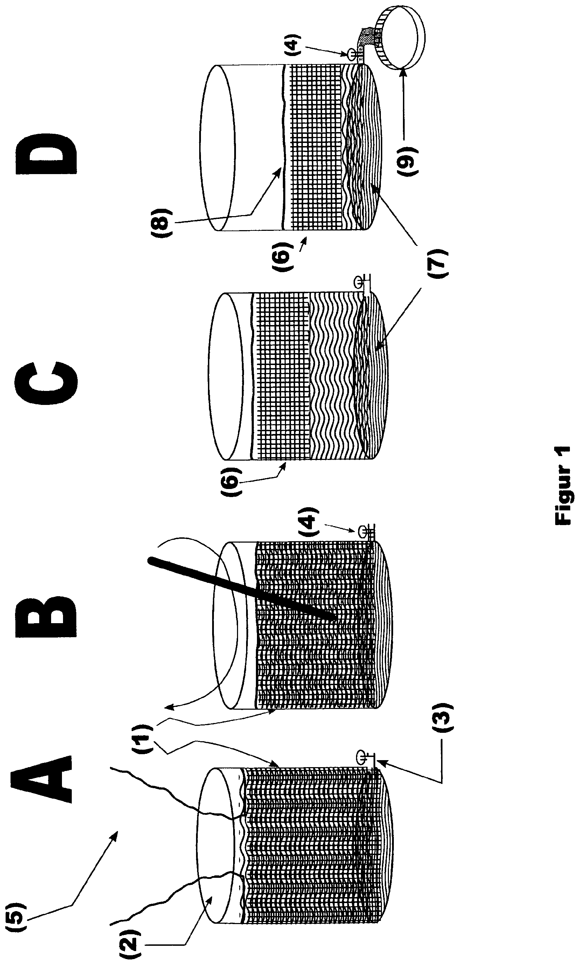

**Fig. 1** zeigt schematisch eine Anordnung eines Reaktionsgefäßes in den Verfahrensphasen, nämlich das Füllen mit dem Gemisch aus der hochviskosen Zuckerlösung und dem Extraktionsgut, die optionalen Mischvorgänge, die Reifezeit und die Trennungsphase sowie das Ausfließen lassen der hochviskosen Zuckerlösung.

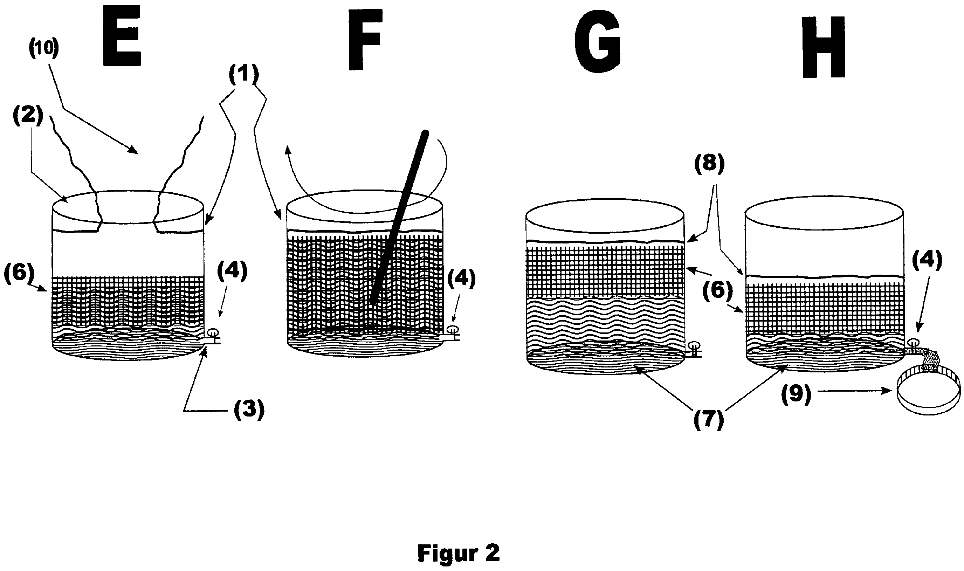

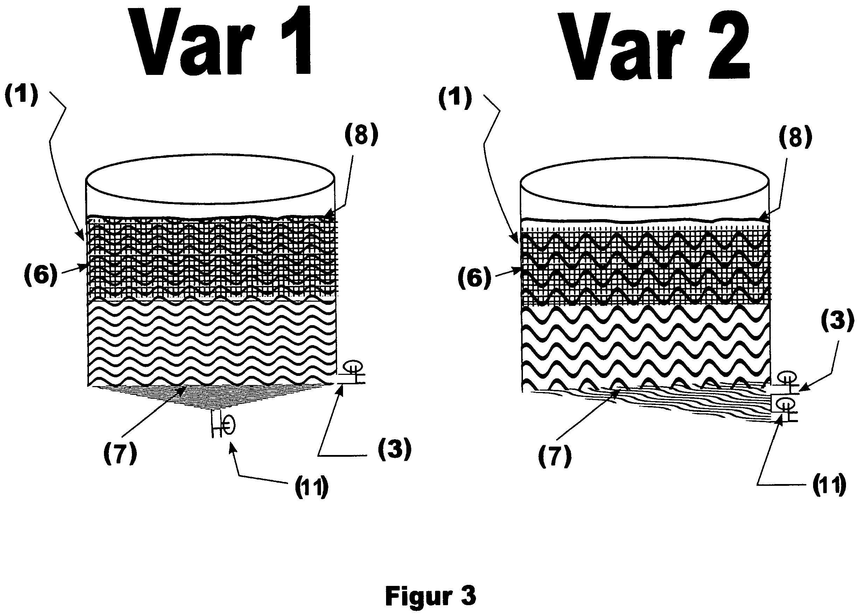

**Fig. 2** zeigt die sich daran anschließenden Phasen zur weiteren Extraktion bzw. Auswaschung der lösbaren Stoffe. Hierbei wird unvermischte hochviskose Zuckerlösung zugegeben. Die unvermischte hochviskose Zuckerlösung mischt sich aufgrund des Auftriebs mit dem vorher verdichteten Gemisch aus Honig und Extraktionsgut. Am oberen Rand bildet sich wieder ein verdichtetes Gemisch aus hochviskoser Zuckerlösung und Extraktionsgut und unten kann wieder angereicherte hochviskose Zuckerlösung abgelassen werden. **Fig. 3** zeigt noch zwei Ausführungsvarianten, wobei ein zweiter Ablass angebracht wurde, um nicht lösbare Ablagerungen ablassen zu können.

### BESCHREIBUNG

Grundsätzlich betrifft das erfindungsgemäße Verfahren ein Verfahren zum Anreichern von hochviskoser Zuckerlösung anhand von Wirkstoffen und Aromastoffen aus anderen Lebensmitteln. Unter hochviskoser Zuckerlösung sollen alle gängigen, bei Raumtemperatur fließfähigen Honigarten (insbesondere Blütenhonig, Honigtau, Waldhonig, Gelee Royale, Manukahonig, Thymianhonig) sowie fließfähige Sirupe (z. B. Zuckerrübensirup, Apfelkraut-, Melasse-, Ahornsirup, Reis-, Weizen-, Gerstensirup, Agavensirup) verstanden werden.

Von Bedeutung ist bei dem erfindungsgemäßen Verfahren ferner, dass das spezifische Gewicht der hochviskosen Zuckerlösung größer ist als das spezifische Gewicht des verwendeten Extraktionsgutes. Außerdem kann es (insbesondere im Hinblick auf Honig) bei Raumtemperatur ausgeführt werden. Eine Erhitzung ist nicht unbedingt erforderlich. Bei der Verwendung von Sirupen jedoch beschleunigt es den Aromatisierungsprozess.

Unter "Anreichern" des Honigs wird verstanden, dass durch das erfindungsgemäße Verfahren Inhaltsstoffe aus dem Extraktionsgut in den Honig übertreten. Es kann ein Aromatisieren, also der Übertritt von Geschmacksstoffen als auch von anderen Wirkstoffen, etwa von ätherischen Komponenten mit Heilwirkung, erfolgen. Das Extraktionsgut insgesamt ist jedoch nicht Teil des mit diesem Verfahren erstellten Endprodukts.

Unter "Reifezeit" soll im Folgenden der Zeitraum vom ersten Kontakt der hochviskosen Zuckerlösung mit dem Extraktionsgut bis zur abschließenden Trennung beider Komponenten verstanden werden. Insbesondere kann das Verschließen und Öffnen eines Reaktionsgefäßes, in dem der wesentliche Teil der Reifezeit abläuft und in dem es zu einer Trennung der hochviskosen Zuckerlösung von dem Extraktionsgut kommt, auch entfallen, wenn die hochviskose Zuckerlösung sehr langsam aus dem Reaktionsgefäß ausströmt. Hierbei wird ein Fließverfahren realisiert.

Das spezifische Gewicht wie auch die hohe Viskosität der Zuckerlösung ist daher von Bedeutung, da die hochviskose Zuckerlösung dem Extraktionsgut einen Auftrieb derart verleihen soll, dass das Extraktionsgut nach oben getrieben wird und somit eine Trennung der Substanzen erfolgt. Diese Trennung soll jedoch nicht zu schnell erfolgen, so dass in der Reifezeit genügend Wirkstoffe aus den pflanzlichen Feststoffen in die hochviskose Zuckerlösung übergehen können.

Das Zerkleinern des Extraktionsguts, insbesondere die durch das vorgestellte Verfahren ermöglichte, sehr starke Verkleinerung bzw. Pulverisierung des Extraktionsguts ist insofern von Bedeutung, als dass hierdurch die Reaktionsgeschwindigkeit, d. h. die Anreicherungsgeschwindigkeit stark erhöht bzw. verstärkt wird. Dies ist durch die sich ergebende Erhöhung der wirksamen Oberfläche bzw. Reaktionsfläche zwischen hochviskoser Zuckerlösung und Extraktionsgut zu begründen.

Außerdem findet bei der Verwendung von pulverisiertem Extraktionsgut am oberen Rand der Mischung keine vollständige Trennung zwischen Extraktionsgut und der hochviskosen Zuckerlösung statt. Eine vollständige Trennung könnte zu einer Beeinträchtigung des Extraktionsgutes im Rahmen eines Verfahrens führen, weil die aus dem Extraktionsgut zu extrahierenden Stoffe (z.B. ätherische Öle) in die Umgebungsluft entweichen könnten und nicht für die Aromatisierung der hochviskosen Zuckerlösung verfügbar wären. Außerdem könnte durch Oxidationsprozesse die Qualität des Extraktionsguts beeinträchtigt werden.

Optionale Mischvorgänge erhöhen die Effizienz des Anreichungsvorgangs und können regelmäßig innerhalb der Reifephase ausgeführt werden.

Siebe können nach Trennung von hochviskoser Zuckerlösung und Extraktionsgut eingesetzt werden, um möglicherweise nach Abschluss des Reife- und Separationsverfahrens noch einzelne Bestandteile vom endgültigen Produkt zu trennen. Sie können aber insbesondere dafür verwendet werden, um im Rahmen eines stetigen Fließverfahrens die Durchflussgeschwindigkeit dahingehend zu steuern, dass eine angemessene Reifezeit, d. h. Aromatisierung der hochviskosen Zuckerlösung und Trennung von Honig und Extraktionsgut, erreicht wird. Hierbei eignen sich Siebe aller Art, z. B. Metallsiebe wie auch dünne Baumwolltücher als Sieb. Insbesondere kann das gesamte Reaktionsgefäß als Sieb realisiert werden, um bei feinporigen Sieben die Sieboberfläche und somit die austretende Menge an aromatisierter hochviskoser Zuckerlösung zu erhöhen.

Das Extraktionsgut soll aus pflanzlichen Feststoffen bestehen. Pflanzliche Feststoffe sollen hierbei insbesondere Kräuter wie Basilikum, Bärlauch, Petersilie, Rosmarin, Salbei, Anis, Fenchel, Oregano sowie Thymian, Gewürze wie etwa Chili oder Zimt sein. Darüber hinaus kann der Begriff pflanzliche Feststoffe aber auch Stoffe wie Kaffee, Kakao, Tee, getrocknetes Obst wie Äpfel, Kirschen oder getrocknete Blüten von Rosen, Lavendel und andere Blütenträger bezeichnen. Im Hinblick auf den Begriff sollen hier aber auch Pilze wie der Trüffel explizit genannt werden.

Das erfindungsgemäße Verfahren wird mit dehydrierten Pflanzenbestandteilen durchgeführt die aufgrund der Wasserreduktion leichter ihre Wirkstoffe und Aromastoffe freisetzen. Die pflanzlichen Feststoffe können bevorzugt getrocknet zerkleinert verwendet werden, wobei das Zerkleinern verfahrenstechnisch nicht beschränkt ist. Selbstverständlich können die pflanzlichen Feststoffe auch als Gemisch verschiedener der oben genannten verwendet werden.

Kräuter sind als getrocknete Kräuter, einzusetzen auch die Gewürze sind getrocknete Gewürze.

Das erfindungsgemäße Verfahren kann vorteilhaft auch im Dunkeln ausgeführt werden, um lichtempfindliche Bestandteile des Honigs oder der pflanzlichen Feststoffe nicht abzubauen. "Im Dunkeln" bedeutet, dass es vor zugsweise nicht unter direktem Lichteinfluss betrieben wird, also nicht unter Sonneneinstrahlung oder unter Lampenlicht. Verdunkeln umfasst hierbei das einfache Abdecken der Vorrichtung, mit der das erfindungsgemäße Verfahren durchgeführt wird, etwa mit einem Licht abschirmenden Tuch oder einer Licht abschirmenden Folie; selbstverständlich genügt es auch, das Verfahren in einem Raum auszuführen, in dem keine Raumbeleuchtung eingeschaltet ist, wenn der Raum wenig oder schwach durch natürliches Licht beleuchtet ist.

Besonders vorteilhaft kann bei der Aromatisierung von Honig die ausbleibende Qualitätsminderung des Honigs durch Vermeidung von Erhitzen gewährleistet werden; Erhitzen ist üblicherweise bei bekannten technischen Lebensmittelverfahren erforderlich, um etwa fließfähigen und filtrierbaren Honig herzustellen oder um die gewünschten pflanzlichen Inhaltsstoffe zu extrahieren.

Weiterhin vorteilhaft ist, dass das gesamte Verfahren auch im Sinne eines Fließprozesses durchgeführt werden kann. Hierbei wird unvermischte hochviskose Zuckerlösung mit geringer Geschwindigkeit nachgefüllt (z. B. nur tropfenweise). Das Nachfüllen sollte in dem Maße geschehen, in dem auch hochviskose Zuckerlösung abfließen kann.

Insgesamt ergeben sich die folgenden Verfahrensstufen: Zunächst erfolgt das Füllen eines Reaktionsgefäßes, das eine Einfüllöffnung und eine Auslassöffnung aufweist, wobei die Auslassöffnung stromabwärts der Einfüllöffnung angeordnet ist, mit einem Gemisch aus hochviskoser Zuckerlösung und Extraktionsgut.

Nunmehr wird das Reaktionsgefäß stromabwärts der Auslassöffnung verschlossen, wenn die hochviskose Zuckerlösung bis zur Auslassöffnung geflossen ist. Zum Verschließen kann ein Verschlussdeckel, ein Gummistopfen, ein Verschlusskorken, ein Glasverschluss oder jede andere geeignete Schließvorrichtungen verwendet werden. Der Zeitpunkt des Verschließens ist von nachrangiger Bedeutung, weil in der Reifephase gegebenenfalls bei dem Füllen eingeschlossene Luftblasen nach oben aus dem Reaktionsgefäß entweichen.

Darauf folgend wird die hochviskose Zuckerlösung mit den pflanzlichen Feststoffen stehen gelassen, um die so genannte Reifezeit zu absolvieren. In der Reifezeit findet aufgrund des Auftriebs einerseits eine Trennung zwischen der hochviskosen Zuckerlösung und dem Extraktionsgut statt. Zum anderen werden entsprechend lösungsfähige Bestandteile aus dem Extraktionsgut herausgelöst.

Die Reifezeit kann über die eigentliche Trennungsphase hinaus verlängert werden. Dies hat den Vorteil, dass in der verdichteten Schicht aus hochviskoser Zuckerlösung und Extraktionsgut am oberen Ende des Reaktionsgefäßes entsprechend mehr lösungsfähige Stoffe gelöst werden können.

Um eine ausreichende Aromatisierung und Trennung von hochviskoser Zuckerlösung und Extraktionsgut zu erreichen, hat sich eine Zeit des Reifens beziehungsweise des Stehenlassens der Anordnung von wenigen Stunden bis höchstens zur geringsten Dauer der Haltbarkeit des Honigs bzw. des Extraktionsguts, abhängig vom Aroma des jeweiligen Extraktionsguts, als zweckmäßig erwiesen.

Selbstverständlich kann das Verschließen des Reaktionsgefäßes entfallen, wenn das Durchfließen und Ausfließen der hochviskosen Zuckerlösung, d. h. der Zeitraum vom ersten Kontakt bis zur abschließenden Trennung insgesamt die Dauer der Reifezeit umfasst oder übersteigt.

Während der Reifezeit können die hochviskose Zuckerlösung und das Extraktionsgut bzw. die pflanzlichen Feststoffe regelmäßig bzw. ununterbrochen durchmischt werden, sofern gewährleistet ist, dass am unteren Rand des Reaktionsgefäßes ausreichend Platz ist, dass sich unvermischte hochviskose Zuckerlösung dort absetzen kann.

Bei Honig und dehydrierten pflanzlichen Feststoffen tritt die Trennung aufgrund der unterschiedlichen Dichte von Honig (Dichte etwa 1 ,4 kg/l) und dehydrierten pflanzlichen Feststoffen (Dichte < 1 kg/l) ein. Bei Sirupen soll die Auswahl von Sirup und Extraktionsgut im Verfahren entsprechend gewählt werden. Auch im Hinblick auf Sirupe ist das spezifische Gewicht im Allgemeinen grösser als 1 kg/l, da der Zucker ein spezifisches Gewicht von 1 ,6 kg/l hat.

Nach Abschluss der Reifezeit, insbesondere nach ausreichender Trennung zwischen hochviskoser Zuckerlösung und Extraktionsgut lässt man die hochviskose Zuckerlösung durch die Auslassöffnung in das Auffanggefäß oder zur Weiterverarbeitung (Konfektionierung, Verpackung etc.) ausfließen.

Daraufhin kann wiederum neue hochviskose Zuckerlösung von oben nachgegossen werden. Das Nachgießen kann bei sehr großen bzw. weiten Gefäßen auch an mehreren Stellen oberhalb des Reaktionsgefäßes geschehen. Hierdurch soll verhindert werden, dass bei der nun folgende Vermischungs-, Reifungs- bzw. Auswaschungsphase nur an einer eingeengten Stelle eine Reaktion stattfindet. Bei dem Nachgießen ist eine gleichmäßige Verteilung der hochviskosen Zuckerlösung oberhalb der verdichteten Schicht aus hochviskoser Zuckerlösung und Extraktionsgut von Vorteil.

Wie in Figur 1 gezeigt wird nunmehr zunächst in einer Phase A das Reaktionsgefäß 1 zu drei Vierteln mit dem Gemisch aus hochviskoser Zuckerlösung und Extraktionsgut 5 gefüllt.

Phase B zeigt einen optionalen Mischvorgang. In Phase C ist gezeigt, dass die hochviskose Zuckerlösung nunmehr ausreichend von dem Extraktionsgut getrennt ist. Wenn eine ausreichende Reifezeit verstrichen ist und eine ausreichende Trennung herbeigeführt wurde, kann wie in Phase D gezeigt die aromatisierte hochviskose Zuckerlösung ausfließen, indem der Auslasshahn geöffnet wird. Wie gezeigt fließt nun die angereicherte hochviskose Zuckerlösung 7 in einen Auffangbehälter 9.

Um eine weitere Auswaschung zu ermöglichen, kann nun wie in Figur 2, Phase E gezeigt wieder unvermischte hochviskose Zuckerlösung nachgegossen werden. Durch optionale Mischvorgänge (Phase F) kann die Effizienz der Anreicherung erhöht werden. Die nachgegossene hochviskose Zuckerlösung vermischt sich mit dem noch verbliebenen, verdichteten Gemisch aus hochviskoser Zuckerlösung und Extraktionsgut. Die hochviskose Zuckerlösung wandert aufgrund des höheren spezifischen Gewichts durch das verdichtete Gemisch aus Honig und Extraktionsgut und trennt sich im unteren Teil des Reaktionsgefäßes wieder vom Extraktionsgut (Phase G). In der Phase H kann wieder angereicherte hochviskose Zuckerlösung abgelassen werden. Die Phasen E - H können bis zur vollständigen Erschöpfung des Extraktionsgutes wiederholt werden. Hierbei sollte jedoch nicht die Dauer der Haltbarkeit der verwendeten Materialien überschritten werden.

Das Verfahren kann beispielsweise in einem runden Reaktionsgefäß ausgeführt werden, das beispielhaft wie folgt ausgeführt ist:

Das Reaktionsgefäß hat eine Höhe von etwa 20 cm und einen Durchmesser von 15 cm. Am unteren Ende ist ein Quetschverschluss (d. h. ein Auslauf mit einem kleinem Schlauch und einer Klammer, die den Schlauch zusammen presst, Schlauchinnendurchmesser ungefähr 1 cm) angebracht.

Es werden 200 g fein gemahlener Zimt und 2 kg fließfähiger Akazienhonig miteinander verrührt, um eine gleichmäßige homogene Masse zu erhalten. Das Ganze wird in das Reaktionsgefäß gegeben. Hierdurch ergibt sich eine Füllung von ungefähr 55 % (11 cm hoch). Die Mischung lässt man 24 Stunden stehen. Dabei trennt sich der Honig vom Zimt. In Abständen von einer Stunde kann Honig und Zimt gut durchgemischt werden.

Nach 24 Stunden Reife- bzw. Trennungszeit ohne Mischvorgänge haben sich eine 4 cm hohe Schicht von angereichertem Honig (ohne weitere Bestandteile), darauf eine Schicht von 1 cm Honig mit feinen Schwebstoffen und darüber eine konzentrierte Schicht von Honig und Zimtpulver gebildet. Nun können 400 g angereichter Honig abgelassen werden.

Es werden nun wieder 400 g fließfähiger Akazienhonig nachgefüllt wodurch sich erst einmal, von unten betrachtet, eine Schicht von 1 cm Honig, darüber eine konzentrierte Schicht von Honig und Zimtpulver und darüber eine 2 cm hohe Schicht von unvermischten Honig ergibt.

Nach weiteren optionalen Mischvorgängen und einer Ruhe- bzw. Trennungszeit von 24 Stunden ist der nachgefüllte Honig in die Schicht mit dem konzentrierten Honig/Zimt-Gemisch eingedrungen und unten hat sich wieder eine 1 ,5 cm dicke Schicht von angereichertem Honig ohne weitere Inhaltsstoffe gebildet. Darüber eine Schicht von 2 cm Honig mit Schwebstoffen und darüber wieder eine Schicht von 5,5 cm konzentriertem Honig/Zimt-Gemisch. Jetzt können weitere 400 g angereicherter Honig abgelassen werden und der Prozess kann von neuem durchgeführt werden.

Anstatt des vorliegend ausgeführten runden Gefäßes kann jedwedes wannenförmige Gefäß, etwa eine viereckige Schüssel mit einer Auslassöffnung, verwendet werden.

Das Reaktionsgefäß kann weiterhin mit zwei Auslassöffnungen ausgestattet sein, um Ablagerungen am Boden des Reaktionsgefäßes auszuschwemmen (siehe Fig. 3).

Vorteilhaft kann statt eines Deckels, Stopfens oder Korkens oder jedweder anderen Verschlussvorrichtung auch ein Hahn wie beispielsweise ein Kugelhahn an der Auslassöffnung angeordnet werden.

### BEZUGSZEICHENLISTE ZU FIGUR 1, 2 UND 3

### Phasen:

A: Einfüllen
B: Optionale Mischphase
C: Ruhe-, Reife- bzw. Trennungsphase
D: Ausfließen

### Komponenten:

(1): Reaktionsgefäß
(2): Einlassöffnung
(3): Auslassöffnung für aromatisierte hochviskose Zuckerlösung
(4) : Verschlusshahn
(5): einfließendes Gemisch aus hochviskoser Zuckerlösung und Extraktionsgut
(6): verdichtetes Gemisch aus hochviskoser Zuckerlösung und Extraktionsgut
(7): hochviskose Zuckerlösung angereichert
(8) : Pegel der hochviskosen Zuckerlösung
(9): Auffangbehälter
(10) : unvermischte hochviskose Zuckerlösung
(11) : Auslassöffnung für Ablagerungen

## Patentansprüche

1. Verfahren zum Anreichern von Sirup und Honig mit lösbaren Bestandteilen eines Extraktionsguts, wobei
- das spezifische Gewicht des Extraktionsguts kleiner ist als das von Sirup oder Honig und
- das Extraktionsgut in einer Granularität mit einer Korngröße kleiner 0,8 mm vorliegt und
- es sich bei dem Extraktionsgut um dehydrierte Pflanzenbestandteile handelt, mit den Schritten:
- Füllen eines Reaktionsgefäßes, das eine Einfüllöffnung (2) und eine Auslassöffnung (3) aufweist, wobei die Auslassöffnung (3) stromabwärts der Einfüllöffnung (2) angeordnet ist, mit einem Gemisch aus Sirup oder Honig und Extraktionsgut,
- Reifen der Mischung aus dem Extraktionsgut und dem Sirup oder Honig bei Raumtemperatur in einer Reifephase über eine Reifezeit, bis zu einer abschließenden Trennung beider Komponenten, wobei sich eine obere Phase aus verdichtetem Extraktionsgut und hochviskoser Zuckerlösung und eine untere Phase aus angereichertem Sirup oder Honig ergibt, wobei die Reifezeit insgesamt, auch bei wiederholter Durchführung der Phasen Nachfüllen, Reifephase und Ausfließen minimal 0,5 Stunden beträgt und maximal die Haltbarkeitsdauer des Honigs, des Sirups oder des Extraktionsguts nicht übersteigt,
- ungefiltertes Ausfließen der angereicherten hochviskosen Zuckerlösung durch die Auslassöffnung (3).

2. Verfahren nach Anspruch 1 mit zusätzlichen Mischvorgängen während der Reifephase.

3. Verfahren nach einem der vorstehenden Ansprüche mit zusätzlichen Nachfüllvorgängen mit nicht angereichertem Sirup oder Honig oder einem Gemisch aus Sirup oder Honig und Extraktionsgut nach dem Ablassen von schon angereichertem Sirup oder Honig.

4. Verfahren nach einem der vorstehenden Ansprüche, mit den Schritten des
- Verschließens des Reaktionsgefäßes stromabwärts der Auslassöffnung (3), wobei das Verschließen vor oder nach dem Einfüllen von Sirup oder Honig und Extraktionsgut erfolgen kann und der Zeitpunkt von nachgelagerter Bedeutung ist, weil während der Reifezeit möglicherweise vorhandene Lufteinschlüsse mit der Aufwärtsbewegung des Extraktionsguts nach oben entweichen;
- Öffnens der Abdeckung (8) nach Abschluss der Reifezeit.

5. Verfahren nach einem der vorstehenden Ansprüche, bei dem das Reaktionsgefäß (2) Auslassöffnungen (3) am unteren Ende aufweist, eine Auslassöffnung, um Ablagerungen ausschwemmen zu können, und eine, um den angereicherten Sirup oder Honig ausfließen zu lassen.

6. Verfahren nach einem der vorstehenden Ansprüche, **dadurch gekennzeichnet, dass** das Extraktionsgut gebildet ist aus Kräutern, Gewürzen, getrocknetem Obst, Kaffee, Kakao, Tee, Pilzen, insbesondere Trüffeln oder einer Mischung aus zumindest zwei der vorgenannten pflanzlichen Feststoffe in der jeweiligen dehydrierten Form der pflanzlichen Feststoffe und Zuckerrübensirup, Apfelkraut-, Melasse-, Ahornsirup, Reis-, Weizen-, Gerstensirup, Agavensirup oder Honig wie Blütenhonig, Honigtau, Waldhonig, Gelee Royale, Manukahonig oder Thymianhonig.

## Claims

1. A method for enriching syrup and honey with soluble constituents of an extraction material, wherein
- the specific weight of the extraction material is lower than that of syrup or honey and
- the extraction material is present in a granularity with a grain size of less than 0.8 mm and
- the extraction material is dehydrated plant constituents,
comprising the steps:
- filling of a reaction vessel, which has a filling opening (2) and a outlet opening (3), wherein the outlet opening (3) is arranged downstream of the filling opening (2), with a mixture of syrup or honey and extraction material,
- maturing of the mixture of the extraction material and the syrup or honey at room temperature in a maturing phase for a maturing period until a concluding separation of both components, wherein an upper phase of compacted extraction material and highly viscous sugar solution and a lower phase of enriched syrup or honey are obtained, wherein the total maturing period, even if the refilling phase, maturing phase and discharge phase are repeated, is a minimum of 0.5 hours and, as a maximum, does not exceed the shelf-life of the honey, the syrup or the extraction material,
- unfiltered outflow of the enriched highly viscous sugar solution through the outlet opening (3).

2. The method according to Claim 1, comprising additional mixing procedures during the maturing phase.

3. The method according to one of the preceding claims, comprising additional refilling procedures with non-enriched syrup or honey or a mixture of syrup or honey and extraction material following the discharge of already enriched syrup or honey.

4. The method according to one of the preceding claims, comprising the steps of
- closing the reaction vessel downstream of the outlet opening (3), wherein the closure can take place before or after the filling with syrup or honey and extraction material and the timing is of subsequent significance because air pockets which may be present during the maturing period escape upwards with the upward movement of the extraction material;
- opening the cover (8) after completion of the maturing period.

5. The method according to one of the preceding claims, in which the reaction vessel (2) has outlet openings (3) at the lower end, one outlet opening for enabling sediments to be flushed out and one for enabling the enriched syrup or honey to flow out.

6. The method according to one of the preceding claims, **characterized in that** the extraction material is formed from herbs, spices, dried fruit, coffee, cacao, tea, fungi, in particular truffles, or a mixture of at least two of the above-mentioned solid plant substances in the respective dehydrated form of the solid plant substances and sugar beet syrup, apple syrup, molasses, maple syrup, rice syrup, wheat syrup, barley syrup, agave syrup or honey such as blossom honey, honeydew, forest honey, royal jelly, manuka honey or thyme honey.

## Revendications

1. Procédé d'enrichissement de sirop et de miel à l'aide des éléments solubles d'un produit d'extraction, dans lequel
- la masse spécifique du produit d'extraction est inférieure à celle du sirop ou miel et
- le produit d'extraction présente une granulométrie inférieure à 0,8 mm et
- le produit d'extraction est composé de composants végétaux déshydratés,
et qui comprend les étapes suivantes :
- remplissage d'un récipient de réaction, qui présente une ouverture de remplissage (2) et une ouverture d'évacuation (3) et dans lequel l'ouverture d'évacuation (3) est située en aval de l'ouverture de remplissage (2), avec un mélange composé de sirop ou de miel et d'un produit d'extraction,
- maturation du mélange composé du produit d'extraction et du sirop ou du miel lors d'une phase de maturation pendant une durée de maturation menant à la séparation finale des deux composants, à l'issue de laquelle apparaissent une phase supérieure, constituée du produit d'extraction condensé et de la solution sucrée à viscosité élevée, et une phase inférieure, constituée de sirop ou de miel enrichi, pour laquelle la durée de maturation, même dans le cas d'une répétition des étapes de remplissage, de maturation et d'évacuation, s'élève au minimum à 0,5 heure et ne dépasse pas la durée de conservation du miel, du sirop ou du produit d'extraction,
- évacuation sans filtrage de la solution sucrée enrichie à viscosité élevée à travers l'ouverture d'évacuation (3).

2. Procédé selon la revendication 1 comprenant des étapes de mélange supplémentaires lors de la phase de maturation.

3. Procédé selon l'une quelconque des revendications précédentes comprenant des étapes de remplissage supplémentaires avec soit du sirop ou du miel non enrichi, soit un mélange d'un produit d'extraction et de sirop ou de miel obtenu après évacuation du sirop ou du miel déjà enrichi.

4. Procédé selon l'une quelconque des revendications précédentes, comprenant les étapes
- de fermeture du récipient de réaction en aval de l'ouverture d'évacuation (3), qui peut avoir lieu avant ou après le remplissage du récipient avec le sirop ou le miel et le produit d'extraction, le moment choisi pour la fermeture n'ayant qu'une importance secondaire étant donné que les éventuelles bulles d'air présentes pendant la durée de maturation s'échappent vers le haut en suivant le mouvement ascendant du produit d'extraction ;
- d'ouverture du revêtement (8) à la suite de la durée de maturation.

5. Procédé selon l'une quelconque des revendications précédentes, pour lequel le récipient de réaction (2) présente des ouvertures d'évacuation (3) en son extrémité inférieure : une première ouverture d'évacuation afin de pouvoir éliminer les sédiments et une deuxième ouverture d'évacuation, afin de laisser le sirop ou le miel enrichi s'écouler.

6. Procédé selon l'une quelconque des revendications précédentes, **caractérisé en ce que** le produit d'extraction est formé soit à partir de fines herbes, d'épices, de fruits secs, de café, de cacao, de thé, de champignons, notamment de truffes, soit à partir d'un mélange composé d'au moins deux des matières solides végétales précitées dans leur forme déshydratée et, au choix, de sirop de betterave sucrière, de sirop de pomme, de sirop de mélasse, de sirop d'érable, de sirop de riz, de sirop de blé, de sirop d'orge malté, de sirop d'agave ou alors de miel, comme le miel de fleurs, le miellat, le miel de forêt, la gelée royale, le miel de manuka ou le miel de thym.
